(19) Europäisches Patentamt
European Patent Office
Office européen des brevets

(11) **EP 3 011 300 B1**

(12) **EUROPÄISCHE PATENTSCHRIFT**

(45) Veröffentlichungstag und Bekanntmachung des Hinweises auf die Patenterteilung:
**27.02.2019 Patentblatt 2019/09**

(21) Anmeldenummer: **14730503.1**

(22) Anmeldetag: **11.06.2014**

(51) Int Cl.:
**G01M 17/013** (2006.01)

(86) Internationale Anmeldenummer:
**PCT/EP2014/062143**

(87) Internationale Veröffentlichungsnummer:
**WO 2014/202443 (24.12.2014 Gazette 2014/52)**

(54) **SENSOREINHEIT FÜR EIN FAHRZEUG**

SENSOR UNIT FOR A VEHICLE

UNITÉ DE DÉTECTION POUR UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.06.2013 DE 102013211697**

(43) Veröffentlichungstag der Anmeldung:
**27.04.2016 Patentblatt 2016/17**

(73) Patentinhaber: **Robert Bosch GmbH
70442 Stuttgart (DE)**

(72) Erfinder:
• **STEINLECHNER, Siegbert
71229 Leonberg (DE)**
• **SCHEUING, Jan
Brackenheim 74336 (DE)**
• **SCHROEDER, Christoph
Pleidelsheim 74385 (DE)**

(56) Entgegenhaltungen:
**EP-A2- 1 308 320          WO-A1-2009/070065
US-A1- 2007 299 573**

EP 3 011 300 B1

**Beschreibung**

Stand der Technik

Die Erfindung geht aus von einer Auswerte- und Steuereinheit nach der Gattung des unabhängigen Patentanspruchs 1.

Üblicherweise werden Radschrauben beispielsweise beim Reifenwechsel in einer Werkstatt angezogen und müssen vom Fahrer nach einer Einfahrstrecke (typischerweise werden 80 km empfohlen) nochmal nachgezogen werden. Diese Überprüfung durch den Fahrer entfällt jedoch oft. Sollten sich die Radschrauben während der Fahrt lösen, kann dies zu beträchtlichen Unfällen mit großem Personen- und Sachschaden führen. Nachfolgend wird der Begriff "Radschraube" als befestigendes Element der Felge verwendet, so dass Ausführungsformen der vorliegenden Erfindung ebenfalls anwendbar sind, wenn die befestigende Funktion durch einen Radbolzen und die zugehörige Radmutter gegeben ist.

Aus dem Stand der Technik sind im Bereich der Fahrzeugräder Sensoren zur Erfassung einer Raddrehzahl und/oder zur Erfassung eines Reifendrucks bekannt. Systeme, welche gelöste Radschrauben im normalen Fahrbetrieb des Fahrzeugs erkennen sind nicht bekannt.

Aus der JP 2008157663 A ist eine Vorrichtung bekannt, welche die Raddrehzahl über einen elektromagnetischen Drehzahlsensor ermittelt. Zudem werden ein Vibrationssensor zur Erfassung von Vibrationen und ein Temperatursensor zur Temperaturerfassung im korrespondierenden Radlager verwendet. Über eine weitere Vorrichtung werden eventuelle Abnormitäten im Drehzahlsensor oder in einem Sensorkabel oder im Radlager erkannt.

Aus der US 2007/0299573 A1 ist ein auf einem Beschleunigungsmesser basierendes System zur Erkennung von Reifenlaufflächenablösungen und lockeren Rädern bekannt.

Aus der EP 1 308 320 A2 ist ein Verfahren zur Ermittlung sich anbahnender Laufstreifenablösung eines Luftreifens bei einem Fahrzeug bekannt.

Aus der WO 2009/070065 A1 ist eine Radüberwachungsvorrichtung bekannt, welche den Betrieb eines Fahrzeugrads überwacht. Die Überwachungsvorrichtung umfasst eine Sensoranordnung mit mindestens einer Drehzahlerfassungsvorrichtung, welche fortlaufend mindestens eine Zustandsgröße erfasst und an mindestens eine Auswerteund Steuereinheit ausgibt, welche von mindestens einer Drehzahlerfassungsvorrichtung ausgegebene Signale empfängt und auswertet. Die mindestens eine Auswerte- und Steuereinheit führt einen ersten Auswertevorgang mit der erfassten mindestens einen Zustandsgröße durch und ermittelt eine Drehzahl mindestens eines Fahrzeugrads, dessen Felge über Radbefestigungsmittel an einer korrespondierenden Radnabe befestigt ist. Zudem führt die mindestens eine Auswerte- und Steuereinheit einen zweiten Auswertevorgang durch. Basierend auf der fortlaufend erfassten mindestens einen Zustandsgröße erkennt und überwacht die Auswerte- und Steuereinheit ein mechanisches Spiel zwischen dem mindestens einen Fahrzeugrad und der korrespondierenden Radnabe zur Detektion gelöster Radbefestigungsmittel.

Offenbarung der Erfindung

Die erfindungsgemäße Auswerte- und Steuereinheit für ein Fahrzeug mit den Merkmalen des unabhängigen Patentanspruchs 1 hat demgegenüber den Vorteil, dass ein Lösen der Radschrauben im normalen Fahrbetrieb des Fahrzeugs basierend auf den Messdaten eines Drehzahlfühlers erkannt werden kann. Das bedeutet, dass gelöste Radbefestigungsmittel an einem Fahrzeugrad kontinuierlich während des Betriebs und ohne zusätzliche Sensoren erkannt werden können, wenn bereits Vorrichtungen zur Erfassung der Drehzahl des Fahrzeugrads eingesetzt werden. Ausführungsformen der erfindungsgemäßen Auswerte- und Steuereinheit für ein Fahrzeug werden vorzugsweise zur Ermittlung der Raddrehzahl und zur Überwachung der Radbefestigung eingesetzt, so dass gelöste Radbefestigungsmittel an einem Fahrzeugrad oder an mehreren Fahrzeugrädern in vorteilhafter Weise erkannt und ein korrespondierender Fehlerzustand auf einer entsprechenden Anzeigeeinheit angezeigt und ausgegeben werden kann. Die Drehzahlerfassungsvorrichtung kann beispielsweise als magnetische oder optische Drehzahlerfassungsvorrichtung ausgeführt sein.

Der wesentliche Vorteil der Erfindung ist es, dass die Überwachung der Radbefestigungsmittel kontinuierlich während der Fahrt und ohne zusätzliche externe Sensoren möglich ist. Es werden bereits im Fahrzeug verwendete und weit verbreitete als Drehzahlerfassungsvorrichtungen ausgeführte ABS-Sensoren (ABS: Antiblockiersystem) verwendet. Durch eine weiterführende Signalverarbeitung und Auswertung der vorliegenden Messergebnisse kann ein Lösen der Radschrauben frühzeitig detektiert und eine entsprechende Warnmeldung kann rechtzeitig ausgegeben werden.

Die für die Nutzung der ABS-Funktionalität im Kraftfahrzeug erforderlichen Drehzahlerfassungsvorrichtungen, welche üblicherweise an jedem Fahrzeugrad angebracht sind, messen beispielsweise über eine magnetische Multipolscheibe, welche eine vorgegebene Anzahl von Polbereichen aufweist, und einen Magnetfeldsensor die individuelle Drehgeschwindigkeit eines jeden Fahrzeugrads. Die magnetische Multipolscheibe ist vorzugsweise radseitig am Radlager verbaut und fest mit dem Rad verbunden. Alternativ können auch Zahn- oder Lochscheiben verbaut werden. Auf der anderen Seite der Drehachse ist fahrzeugseitig der Magnetfeldsensor fest angebracht, der beispielsweise als Hall-Sensor oder GMR-Sensor ausgeführt sein kann. Über den Magnetfeldsensor wird eine Zeitdauer gemessen, welche erforderlich ist, damit sich die Multipolscheibe um eine vorgegebene Winkelstellung weiterdreht. Die Messung der Bewegung der Multipolscheibe wird vorzugsweise über eine Messung der Veränderung des magnetischen Feldes durchgeführt.

Ausführungsformen der vorliegenden Erfindung stellen eine Auswerte- und Steuereinheit zur Verfügung, welche von mindestens einer Drehzahlerfassungsvorrichtung ausgegebene Signale empfängt und auswertet. Die Drehzahlerfassungsvorrichtung ist Teil einer Sensoranordnung für ein Fahrzeug. Die Auswerte- und Steuereinheit führt einen ersten Auswertevorgang mit der erfassten mindestens einen Zustandsgröße durch und ermittelt eine Drehzahl mindestens eines Fahrzeugrads, dessen Felge über Radbefestigungsmittel an einer korrespondierenden Radnabe befestigt ist. Hierbei führt die Auswerte- und Steuereinheit einen zweiten Auswertevorgang durch und erkennt und überwacht basierend auf der fortlaufend erfassten mindestens einen Zustandsgröße ein mechanisches Spiel zwischen dem mindestens einen Fahrzeugrad und der korrespondierenden Radnabe zur Detektion gelöster Radbefestigungsmittel.

Jede Drehzahlerfassungsvorrichtung umfasst eine Codierscheibe mit einer vorgegebenen Anzahl von Codebereichen und einen zugeordneten Sensor. Hierbei erzeugt jeder Codebereich im zugeordneten Sensor einen Messimpuls der erfassten Zustandsgröße mit einer vorgegebenen individuellen Impulsdauer, wobei die erfindungsgemäße Auswerte- und Steuereinheit im zweiten Auswertevorgang die individuelle Impulsdauer für jeden Codebereich ermittelt. Hierbei ist die Codierscheibe oder der Sensor mit dem Fahrzeugrad verbunden. Bevorzugt ist jeweils eine Codierscheibe fest mit einem Fahrzeugrad verbunden und ein korrespondierender Sensor ist karosseriefest angeordnet.

Hierbei kann für jedes Fahrzeugrad eine Auswerte- und Steuereinheit vorgesehen werden, welche mit einem korrespondierenden Sensor eine Baueinheit bildet.

Alternativ kann eine gemeinsame Auswerte- und Steuereinheit die für jedes Fahrzeugrad über einen korrespondierenden Sensor erfassten Zustandsgrößen empfangen und auswerten. Dies ermöglicht eine zentrale Auswertung und Erkennung von gelösten Radbefestigungsmitteln.

Durch die in den abhängigen Ansprüchen aufgeführten Maßnahmen und Weiterbildungen sind vorteilhafte Verbesserungen der im unabhängigen Patentanspruch 1 angegebenen Auswerte- und Steuereinheit für ein Fahrzeug möglich.

In vorteilhafter Ausgestaltung der erfindungsgemäßen Auswerte- und Steuereinheit kann die Auswerte- und Steuereinheit im zweiten Auswertevorgang eine mittlere Impulsdauer über eine Radumdrehung als Quotient aus der Summe der erfassten individuellen Impulsdauern der vorhandenen Codebereiche der Codierscheibe und der Anzahl der vorhandenen Codebereiche berechnen.

Üblicherweise kann die Codierscheibe nicht perfekt gefertigt werden. Durch die entstehenden Toleranzen wie Teilungsfehler der Codebereiche sind die gemessenen Impulsdauern bezogen auf eine geschwindigkeitsabhängige mittlere Impulsdauer selbst bei einem idealen, d.h. bei einem fest angezogenen, unwuchtfreien Rad nicht identisch, allerdings für jeden Codebereich fest vorgegeben. Durch sich lösende Radschrauben entsteht ein Spiel zwischen dem Rad und der Radnabe. Hieraus ergeben sich typischerweise kleine Vibrationen in der Radaufhängung, sowie in Lastwechselsituationen ein Schlupf zwischen Rad und Radnabe. Beide Effekte äußern sich in den Messdaten des Sensors.

Der Vibrationseffekt erzeugt eine zusätzliche periodische Variation der individuellen Impulsdauern. Die Frequenz dieser Variation entspricht typischerweise einem ganzzahligen Vielfachen der mit der Anzahl der Radschrauben multiplizierten Raddrehzahl bzw. Radfrequenz. In Lastwechselsituationen, d.h. beim Übergang von einer Beschleunigungsphase in eine Brems- bzw. Motorbremsphase oder umgekehrt, tritt bei gelösten Radschrauben typischerweise ein Schlupf zwischen dem Rad bzw. der Felge und der Radnabe auf. Dieser Schlupf ist abhängig vom mechanischen Spiel zwischen einem Radbefestigungsmittel und dessen Durchgangsöffnung in der Felge. Bei gegebenem Lochkreisradius lässt sich der theoretisch mögliche Schlupfwinkel im Bogenmaß als Quotient errechnen. Typische Werte für den Schlupfwinkel liegen im Bereich von 1 bis 1,5 mm. Der Lochkreisradius liegt fahrzeugabhängig bei einem Wert von ca. 50mm. Folglich ist mit Schlupfwinkeln in der Größenordnung von ca. 1° zu rechnen.

In weiterer vorteilhafter Ausgestaltung bestimmt die Auswerte- und Steuereinheit im zweiten Auswertevorgang eine periodische Variation der individuellen Impulsdauern über die Raddrehzahl. Vorzugsweise führt die mindestens eine Auswerte- und Steuereinheit im zweiten Auswertevorgang durch Filterung und/oder Fouriertransformation eine Transformation der periodischen Variation in den Frequenzbereich durch. Der Übergang in den Frequenzbereich ermöglicht in vorteilhafter Weise eine einfache und schnelle Auswertung der frequenzabhängigen Variation der individuellen Impulsdauern.

In weiterer vorteilhafter Ausgestaltung kann die erfindungsgemäße Auswerte- und Steuereinheit während der Frequenzanalyse Amplituden von Spektrallinien des Frequenzspektrums der periodischen Variation der individuellen Impulsdauer ermitteln, deren Frequenz einem ganzzahligen Vielfachen der mit der Anzahl der Radbefestigungsmittel multiplizierten Raddrehzahl entspricht. Vorzugsweise vergleicht die Auswerte- und Steuereinheit die ermittelten Amplituden der Spektrallinien mit vorgegebenen Schwellwerten und erkennt gelöste Radbefestigungsmittel am korrespondierenden Fahrzeugrad, wenn die ermittelten Amplituden der Spektrallinien die vorgegebenen Schwellwerte erreichen und/oder übersteigen.

In weiterer vorteilhafter Ausgestaltung kann die erfindungsgemäße Auswerte- und Steuereinheit einen Schlupfwinkel eines in Lastwechselsituationen auftretenden Schlupfes zwischen dem mindestens einen Fahrzeugrad und der korrespondierenden Radnabe als Kurzzeitsumme aus einer Differenz einer instantanen Raddrehzahl, welche aus der individuellen Impulsdauer berechnet werden kann, und einer mittleren Raddrehzahl, welche aus der mittleren Impulsdauer berechnet werden kann, und/oder aus der Kurzzeitsumme über die Variation ermitteln und zur Erkennung des mechanischen Spiels zwischen dem mindestens einen Fahrzeugrad und der korrespondierenden Radnabe auswerten. Vorzugsweise erkennt die mindestens eine Auswerte- und Steuereinheit gelöste Radbefestigungsmittel am korrespondierenden Fahrzeugrad, wenn der Betrag des berechneten Schlupfwinkels einen vorgegebenen Schwellwert von beispielsweise 1° erreicht und/oder in einem vorgegebenen Toleranzbereich von beispielsweise ±0,2° um diesen Schwellwert liegt.

In weiterer vorteilhafter Ausgestaltung kann die mindestens eine Auswerte- und Steuereinheit gelöste Radbefestigungsmittel mittels einer optischen und/oder akustischen Warnmeldung anzeigen.

Ein Ausführungsbeispiel der Erfindung ist in den Zeichnungen dargestellt und wird in der nachfolgenden Beschreibung näher erläutert. In den Zeichnungen bezeichnen gleiche Bezugszeichen Komponenten bzw. Elemente, die gleiche bzw. analoge Funktionen ausführen.

Kurze Beschreibung der Zeichnungen

Fig. 1 zeigt ein schematisches Blockdiagramm eines Ausführungsbeispiels einer erfindungsgemäßen Auswerte- und Steuereinheit in einem Fahrzeug.

Fig. 2 zeigt eine schematische perspektivische Darstellung einer Drehzahlerfassungsvorrichtung für ein Fahrzeugaus Fig. 1.

Fig. 3 zeigt eine schematische Darstellung des Zusammenhangs zwischen Bewegung einer Multipolscheibe und einer Messung der Veränderung eines magnetischen Felds.

Fig. 4 zeigt eine schematische Draufsicht auf einen Verbindungsbereich mit fünf Schraubverbindungen zwischen einer Felge und einer Radnabe zur Darstellung eines mechanischen Schlupfes.

Fig. 5 zeigt eine schematische Schnittdarstellung einer im Verbindungsbereich aus Fig. 8 angeordneten Schraubverbindung zwischen der Felge und der Radnabe.

Fig. 6 zeigt eine schematische Darstellung eines ersten Polbereichsspektrums, welches mit der erfindungsgemäßen Sensoranordnung aus Fig. 1 an einem Fahrzeugrad mit fünf festen Radbefestigungsmitteln ermittelt wurde.

Fig. 7 zeigt eine schematische Darstellung eines zweiten Polbereichsspektrums, welches mit der erfindungsgemäßen Sensoranordnung aus Fig. 1 an einem Fahrzeugrad mit fünf gelösten Radbefestigungsmitteln ermittelt wurde.

Fig. 8 zeigt eine schematische Darstellung eines dritten Polbereichsspektrums, welches mit der erfindungsgemäßen Sensoranordnung aus Fig. 1 an einem Fahrzeugrad mit drei festen Radbefestigungsmitteln ermittelt wurde.

Fig. 9 zeigt eine schematische Darstellung eines vierten Polbereichsspektrums, welches mit der erfindungsgemäßen Sensoranordnung aus Fig. 1 an einem Fahrzeugrad mit drei gelösten Radbefestigungsmitteln ermittelt wurde.

Fig. 10 zeigt ein schematisches Kennliniendiagramm zur Darstellung einer instantaner Raddrehzahl und einer mittleren Raddrehzahl, welche mit der erfindungsgemäßen Sensoranordnung aus Fig. 1 an einem Fahrzeugrad ermittelt wurden.

Ausführungsformen der Erfindung

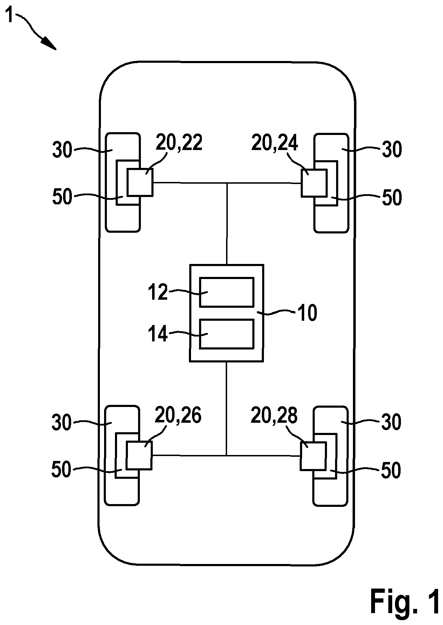

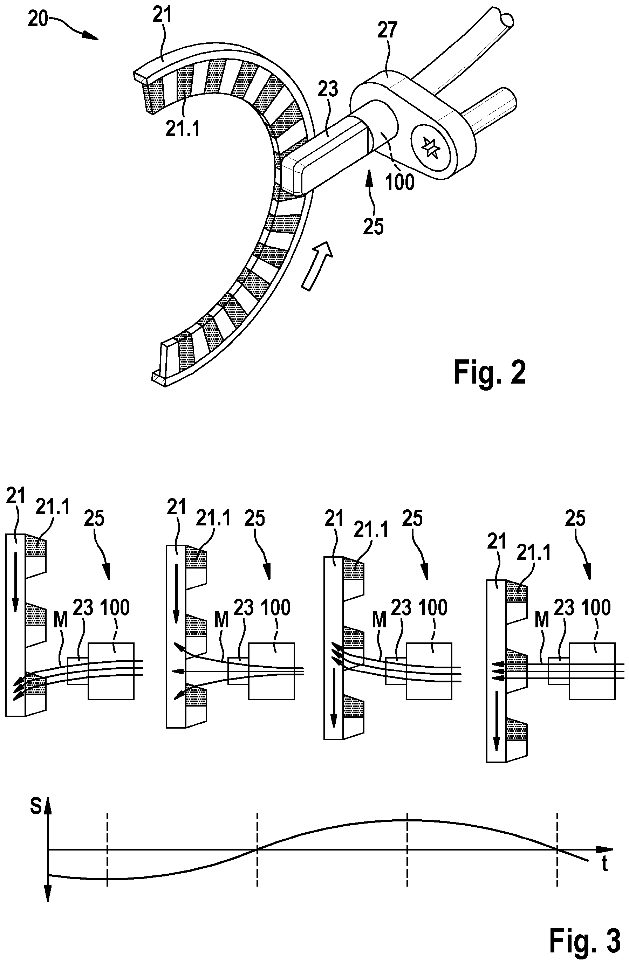

Wie aus Fig. 1 bis 5 ersichtlich ist, umfasst das dargestellte Ausführungsbeispiel einer Sensoranordnung für ein Fahrzeug 1 mehrere Drehzahlerfassungsvorrichtungen 20, 22, 24, 26, 28, welche im dargestellten Ausführungsbeispiel als magnetische Drehzahlerfassungsvorrichtungen 20, 22, 24, 26, 28 ausgeführt sind und fortlaufend mindestens eine Zustandsgröße S eines magnetischen Feldes M erfassen und an eine zentral im Fahrzeug 1 angeordnete Auswerte- und Steuereinheit 10 ausgeben. Wie aus Fig. 2 und 3 weiter ersichtlich ist, kann alternativ jeder Drehzahlerfassungsvorrichtung 20 eine Auswerte- und Steuereinheit 100 zugeordnet werden. Die mindestens eine Auswerte- und Steuereinheit 10, 100 empfängt Signale von mindestens einer Drehzahlerfassungsvorrichtung 20, 22, 24, 26, 28 und wertet diese aus. In einem ersten Auswertevorgang 12 ermittelt die mindestens eine Auswerte- und Steuereinheit 10, 100 eine Drehzahl ω mindestens eines Fahrzeugrads 30, dessen Felge 32 über Radbefestigungsmittel 34 an einer korrespondierenden Radnabe 52 befestigt ist. Erfindungsgemäß führt die mindestens eine Auswerte- und Steuereinheit 10, 100 einen zweiten Auswertevorgang 14 durchführt und erkennt und überwacht basierend auf der fortlaufend erfassten mindestens einen Zustandsgröße S ein mechanisches Spiel zwischen dem mindestens einen Fahrzeugrad 30 und der korrespondierenden Radnabe 52 zur Detektion gelöster Radbefestigungsmittel 34. Die mindestens eine Auswerte- und Steuereinheit 10, 100 zeigt gelöste Radbefestigungsmittel 34 mittels einer optischen und/oder akustischen Warnmeldung an, die über nicht dargestellte Ausgabemittel, welche beispielsweise Warnlampen, Lautsprecher, usw. umfassen, ausgegeben wird.

Wie aus Fig. 2 und 3 weiter ersichtlich ist, umfasst jede Drehzahlerfassungsvorrichtung 20, 22, 24, 26, 28 eine Codierscheibe, welche vorzugsweise als magnetische Encoderscheibe bzw. Multipolscheibe 21 mit einer vorgegebenen Anzahl N von Polbereichen 21.1 ausgeführt ist, und einen zugeordneten als Magnetfeldsensor 23 ausgeführten Sensor. Jeder Polbereich 21.1 erzeugt im zugeordneten Magnetfeldsensor 23 einen Messimpuls der erfassten Zustandsgröße S mit einer vorgegebenen individuellen Impulsdauer $\Delta t_i$, wobei die mindestens eine Auswerte- und Steuereinheit 10, 100 im zweiten Auswertevorgang 14 die individuelle Impulsdauer $\Delta t_i$ für jeden Polbereich 21.1 ermittelt, wobei die Multipolscheibe 21 oder der Magnetfeldsensor 23 mit dem drehbar gelagerten Fahrzeugrad 30 verbunden ist. Im dargestellten Ausführungsbeispiel ist jeweils eine Multipolscheibe 21 fest mit einem Fahrzeugrad 30 verbunden, und ein korrespondierender Magnetfeldsensor 23 ist karosseriefest angeordnet. Bei der Verwendung von jeweils einer Auswerte- und Steuereinheit 100 für jedes Fahrzeugrad 30 bilden die Auswerte- und Steuereinheiten 100 jeweils mit einem korrespondierenden Magnetfeldsensor 23 vorzugsweise eine in einem gemeinsamen Gehäuse 27 angeordnete Sensoreinheit 25.

Die für die Nutzung der ABS-Funktionalität im Kraftfahrzeug an jedem Fahrzeugrad 30 angeordneten Drehzahlerfassungsvorrichtungen 20, 22, 24, 26, 28 messen die individuelle Drehgeschwindigkeit eines jeden Fahrzeugrads 30. Hierzu misst der fahrzeugseitig angebrachte Magnetfeldsensor 23, der beispielsweise als Hall-Sensor oder GMR-Sensor (Giant-Magneto-Resistance) ausgeführt ist, eine Zeitdauer, welche erforderlich ist, damit sich die radseitig angeordnete Multipolscheibe um eine vorgegebenen Winkelstellung weiterdreht. Die Messung der Bewegung der Multipolscheibe 21 wird über eine Messung der Veränderung des magnetischen Feldes M durchgeführt, dessen Feldlinien in Fig. 3 schematisch dargestellt sind. In Abhängigkeit der Stellung der Multipolscheibe 21 in Bezug auf den Magnetfeldsensor 23 ergibt sich der in Fig. 3 dargestellte Signalverlauf für die erfasste Zustandsgröße S des Magnetfelds M. Als Zustandsgröße S wird vorzugsweise eine Magnetfeldstärke B gemessen. Die vorgegebene Winkelstellung entspricht den Abmessungen der einzelnen Polbereiche 21.1 und die Zeitdauer entspricht der o.g. individuellen Impulsdauer $\Delta t_i$.

Üblicherweise kann die Multipolscheibe 21 nicht perfekt gefertigt werden. Durch die entstehenden Toleranzen entstehen Polbereichsteilungsfehler und die gemessenen individuellen Impulsdauern $\Delta t_i$ Zahndauern sind bezogen auf eine geschwindigkeitsabhängige mittlere Impulsdauer $\Delta t_{Mittel}$ selbst bei einem idealen, d.h. fest angezogenen, unwuchtfreien Fahrzeugrad 30 nicht identisch. Allerdings ist die individuelle Impulsdauer $\Delta t_i$ für jeden Polbereich 21.1 fest vorgegeben. Durch sich lösende Radbefestigungsmittel 34 entsteht ein mechanisches Spiel zwischen der Felge 32 bzw. dem Fahrzeugrad 30 und der Radnabe 52. Hieraus ergeben sich typischerweise kleine Vibrationen in der Radaufhängung, sowie in Lastwechselsituationen ein Schlupf $d_s$ zwischen der Felge 32 bzw. dem Fahrzeugrad 30 und der Radnabe 52. Beide Effekte äußern sich in den Messdaten der Magnetfeldsensoren 23.

Der Vibrationseffekt erzeugt eine zusätzliche periodische Variation $\varepsilon_i$ der individuellen Impulsdauer $\Delta t_i$. Die Frequenz dieser Variation $\varepsilon_i$ entspricht typischerweise einem ganzzahligen Vielfachen der mit der Anzahl N der Radbefestigungsmittel 34 multiplizierten Drehzahl ω des korrespondierenden Fahrzeugrads 30. Die mindestens eine Auswerte- und Steuereinheit 10, 100 ermittelt die individuelle Impulsdauer $\Delta t_i$ beispielsweise über die Zeitpunkte der Nulldurchgänge der Zustandsgröße S.

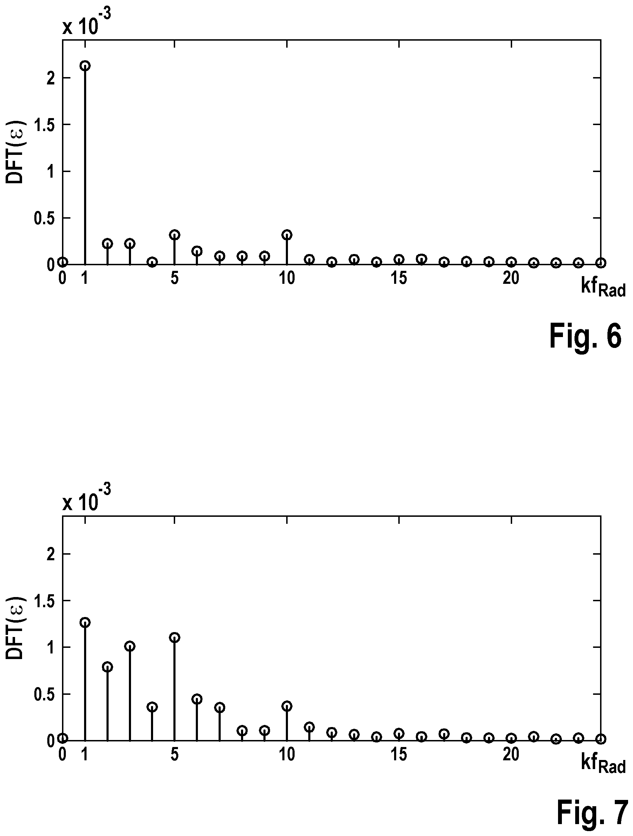

Fig. 6 bis 9 zeigen verschiedene Frequenzspektren dieser Variation $\varepsilon_i$. Dargestellt sind die Frequenzlinien nach einer diskreter Fouriertransformation der Variation $\varepsilon$ über eine vollständige Radumdrehung. Hierzu bildet die mindestens eine Auswerte- und Steuereinheit 10, 100 im zweiten Auswertevorgang 14 für jeden Polbereich 21.1 die individuelle periodische Variation $\varepsilon_i$ als radgeschwindigkeitsunabhängiges Verhältnis von individueller, gemessener Impulsdauer $\Delta t_i$ und mittlerer Impulsdauer $\Delta t_{Mittel}$ abzüglich einer Konstanten mit dem Wert 1 nach Gleichung (1).

$$\varepsilon_i = \frac{\Delta t_i}{\Delta t_{Mittel}} - 1 \qquad\qquad (1)$$

Die mindestens eine Auswerte- und Steuereinheit 10, 100 berechnet im zweiten Auswertevorgang 14 die mittlere Impulsdauer $\Delta t_{Mittel}$ über eine Radumdrehung als Quotient aus der Summe der erfassten individuellen Impulsdauern $\Delta t_i$ der vorhandenen Polbereiche 21.1 der Multipolscheibe 21 und der Anzahl N der vorhandenen Polbereiche 21.1 gemäß Gleichung (2).

$$\Delta t_{Mittel} = \frac{1}{N} \sum_{k=0}^{N-1} \Delta t_{i-k} \qquad (2)$$

Alternativ zur Fouriertransformation kann die mindestens eine Auswerte- und Steuereinheit 10, 100 die periodische Variation $\varepsilon_i$ im zweiten Auswertevorgang 14 durch Filterung in den Frequenzbereich transformieren.

Fig. 6 zeigt beispielhaft ein erstes Polbereichsspektrum, welches mit der erfindungsgemäßen Sensoranordnung an einem Fahrzeugrad 30 mit fünf festen Radbefestigungsmitteln 34 ermittelt wurde. Fig. 7 zeigt ein am selben Fahrzeugrad 30 gemessenes zweites Polbereichsspektrums bei gelösten Radbefestigungsmitteln 34. Wie aus einem Vergleich der Fig. 6 und 7 ersichtlich ist, weisen Spektrallinien des zweiten Polbereichsspektrums gemäß Fig. 7 an Frequenzen, welche einem ganzzahligen Vielfachen der mit der Anzahl N der Radbefestigungsmittel 34 multiplizierten Radfrequenz $f_{Rad}$ entsprechen, eine deutlich höhere Amplitude als die korrespondierenden Spektrallinien des ersten Polbereichsspektrums gemäß Fig. 6 auf. Dies gilt insbesondere für die 5-fache bzw. 10-fache usw. Radfrequenz $f_{Rad}$.

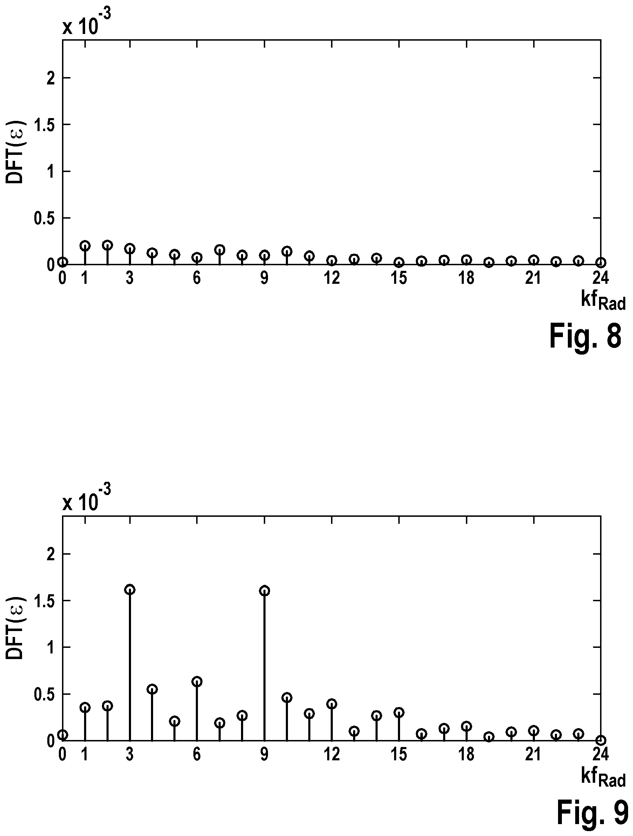

Fig. 8 zeigt beispielhaft ein drittes Polbereichsspektrum, welches mit der erfindungsgemäßen Sensoranordnung an einem Fahrzeugrad 30 mit drei festen Radbefestigungsmitteln 34 ermittelt wurde. Fig. 9 zeigt ein am selben Fahrzeugrad 30 gemessenes viertes Polbereichsspektrums bei gelösten Radbefestigungsmitteln 34. Wie aus einem Vergleich der Fig. 8 und 9 ersichtlich ist, weisen Spektrallinien des vierten Polbereichsspektrums gemäß Fig. 9 an Frequenzen, welche einem ganzzahligen Vielfachen der mit der Anzahl N der Radbefestigungsmittel 34 multiplizierten Radfrequenz $f_{Rad}$ entsprechen, eine deutlich höhere Amplitude als die korrespondierenden Spektrallinien des dritten Polbereichsspektrums gemäß Fig. 8 auf. Dies gilt insbesondere für die 3-fache bzw. 6-fache bzw. 9-fache usw. Radfrequenz $f_{Rad}$.

Die mindestens eine Auswerte- und Steuereinheit 10, 100 ermittelt die Amplituden der Spektrallinien des Frequenzspektrums der periodischen Variation $\varepsilon_i$ der individuellen Impulsdauer $\Delta t_i$, deren Frequenz einem ganzzahligen Vielfachen der mit der Anzahl N der Radbefestigungsmittel 34 multiplizierten Raddrehzahl $\omega$ bzw. Radfrequenz $f_{Rad}$ entspricht. Während der Frequenzanalyse vergleicht die mindestens eine Auswerte- und Steuereinheit 10, 100 die ermittelten Amplituden der Spektrallinien mit vorgegebenen Schwellwerten und erkennt gelöste Radbefestigungsmittel 34 am korrespondierenden Fahrzeugrad 30, wenn die ermittelten Amplituden der Spektrallinien die vorgegebenen Schwellwerte erreichen und/oder übersteigen. Alternativ kann auch nur auf erhöhte Variation $\varepsilon_i$ der Polbereichsteilung detektiert werden.

Zusätzlich oder alternativ nutzt die mindestens eine Auswerte- und Steuereinheit 10, 100 den Schlupfeffekt und wertet zur Detektion von gelösten Radbefestigungsmittel 34 einen aus den Raddrehzahlsignalen ermittelten Schlupf aus.

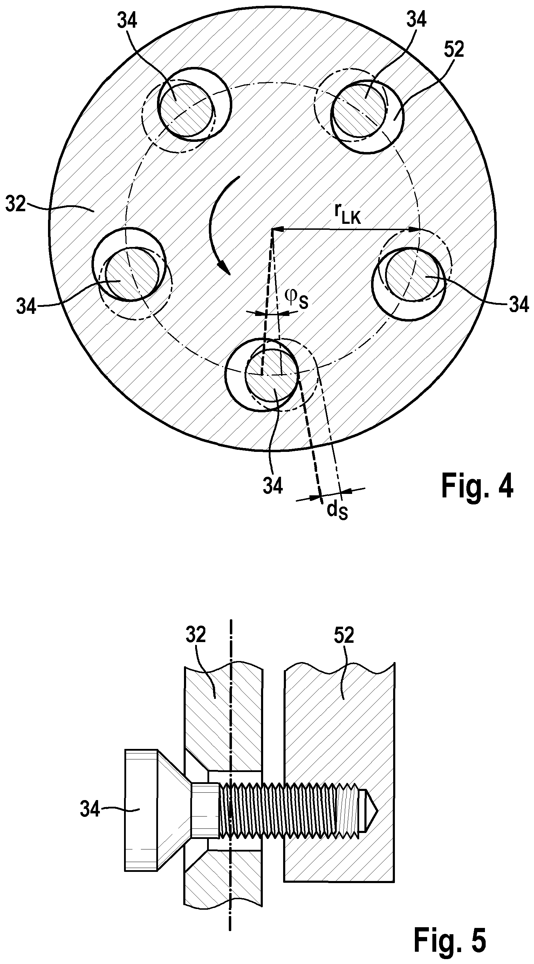

Wie aus Fig. 4 und 5 weiter ersichtlich ist, tritt in Lastwechselsituationen, d.h. beim Übergang von einer Beschleunigungsphase in eine Brems- bzw. Motorbremsphase oder umgekehrt, bei gelösten Radbefestigungsmitteln 34 typischerweise ein Schlupf zwischen Felge 32 und Radnabe 52 auf. Dieser Schlupf ist abhängig vom mechanischen Spiel $d_S$ zwischen einem korrespondierenden Radbefestigungsmittel 34 und dessen Durchführungsöffnung in der Felge 32. Bei gegebenem Lochkreisradius $r_{LK}$ lässt sich der theoretisch mögliche Schlupfwinkel $\varphi_S$ im Bogenmaß als Quotient gemäß Gleichung (3) berechnen.

$$\varphi_S = \frac{d_S}{r_{LK}} \qquad (3)$$

Wie aus Fig. 4 weiter ersichtlich ist, sind die Radschrauben 34 an einer Lochseite im Eingriff. Bei einem Lastwechsel findet ein Wechsel auf die andere gestrichelt dargestellte Lochseite statt. Typische Werte für das mechanische Spiel $d_S$ liegen im Bereich von 1 bis 1,5 mm. Der Lochkreisradius $r_{LK}$ ist fahrzeugabhängig und liegt bei ca. 50mm. Daher ist mit Schlupfwinkeln $\varphi_S$ in der Größenordnung von ca. 1° zu rechnen.

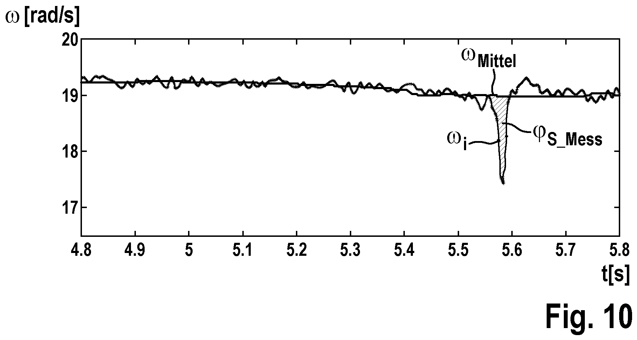

Wie aus Fig. 10 ersichtlich ist, ermittelt die mindestens eine Auswerte- und Steuereinheit 10, 100 im dargestellten Ausführungsbeispiel den Schlupfwinkel $\varphi_S$ aus den gemessenen Raddrehzahlsignalen $\omega$, indem die mindestens eine Auswerte- und Steuereinheit 10, 100 ein Kurzzeitintegral $\varphi_{S\_Mess}$ einer Differenz von instantaner Raddrehzahl $\omega_i$, welche aus der individuellen Impulsdauer $\Delta t_i$ berechnet ist, und mittlerer Raddrehzahl $\omega_{Mittel}$, welche aus der mittleren Impulsdauer ($\Delta t_{Mittel}$) berechnet ist, gemäß Gleichung (4) berechnet.

$$\varphi_{S\_Mess} = \int (\omega_i - \omega_{Mittel})dt \qquad (4)$$

Dies entspricht näherungsweise der Kurzzeit-Summe $\varphi_{S\_Mess}$ gemäß Gleichung (5).

$$\varphi_{S\_Mess} \approx \sum \left( \frac{2\pi}{N \cdot \Delta t_i} - \frac{2\pi}{N \cdot \Delta t_{Mittel}} \right) \cdot \Delta t_i \qquad (5)$$

bzw. nach Umformen der gewichteten Kurzzeit-Summe $\varphi_{S\_Mess,i}$ über die Variation $\varepsilon_i$ gemäß Gleichung (6).

$$\varphi_{S\_Mess,i} = -\frac{2\pi}{N} \sum_{k=0}^{4} \varepsilon_{i-k} . \qquad (6)$$

Der berechnete Schlupfwinkel $\varphi_S$ ist vorzeichenbehaftet, wobei das Vorzeichen angibt, ob die instantane Raddrehzahl $\omega_i$ unter oder über der gemittelten Raddrehzahl $\omega_{Mittel}$ liegt. Hierbei wird bei einem Übergang von einer Beschleunigungsphase in eine Bremsphase eine geringere instantane Raddrehzahl $\omega_i$ erwartet und bei einem entgegengesetzten Lastwechsel wird eine höhere instantane Raddrehzahl $\omega_i$ erwartet.

Zur Detektion des Schlupfeffekts wird daher vorzugsweise fortlaufend die in Gleichung (6) angegebene gewichtete Kurzzeit-Summe $\varphi_{S\_Mess,i}$ über die Variation $\varepsilon_i$ gebildet, beispielsweise über fünf benachbarte Polbereiche 21.1. Dies lässt sich beispielsweise als FIR-Filter (FIR: Finite Impulse Response) mit der Länge 5 implementieren, wobei alle Filterkoeffizienten den Wert 1 aufweisen. Die Summationslänge von 5 folgt aus der Erwartung, dass der Flankenwechsel typischerweise innerhalb einer Rollstrecke abgeschlossen ist, welche fünf Polbereichen 21.1 der Multipolscheibe 21 bzw. ca. einem Zehntel einer Radumdrehung entspricht. Die Auswerte- und Steuereinheit 10, 100 wertet zur Erkennung des mechanischen Spiels $d_S$ zwischen dem mindestens einen Fahrzeugrad 30 bzw. Felge 32 und der korrespondierenden Radnabe 52 in Lastwechselsituationen den berechneten Schlupfwinkel $\varphi_S$ des auftretenden Schlupfes aus. Die mindestens eine Auswerte- und Steuereinheit 10, 100 erkennt gelöste Radbefestigungsmittel 34 am korrespondierenden Fahrzeugrad 30, wenn der Betrag des berechneten Schlupfwinkels $\varphi_S$ einen vorgegebenen Schwellwert erreicht und/oder in einem vorgegebenen Toleranzbereich um diesen Schwellwert liegt. Das mehrfache Auftreten von gemessenen Schlupfwinkeln $\varphi_{S\_Mess,i}$ mit geringer Abweichung vom theoretischen Wert $\varphi_S$ während der Lastwechselsituationen, kann ebenfalls zur Detektion von gelösten Radbefestigungsmitteln 34 genutzt werden.

Ausführungsformen der erfindungsgemäßen Sensoranordnung für ein Fahrzeug 1 können in vorteilhafter Weise ohne hardwareseitigen Mehraufwand in das ESP- oder ABS-Steuergerät eines jeden Fahrzeugs implementiert werden. Auf diese Weise ist können Ausführungsformen der erfindungsgemäßen Sensoranordnung potentiell in jedem Fahrzeug, wie z.B. Pkw, Lkw, Motorrad, eingesetzt werden, das über Raddrehzahlsensoren an den zu überwachenden Rädern verfügt.

Die Erfindung wurde am Beispiel von magnetischen Drehzahlerfassungsvorrichtungen beschrieben, welche Multipolscheiben als Codierscheiben und Magnetfeldsensoren zur Erfassung mindestens einer Zustandsgröße eine magnetischen Feldes umfassen. Selbstverständlich können Ausführungsformen der vorliegenden Erfindung auch mit Drehzahlerfassungsvorrichtungen verwendet werden, welche andere physikalische Größen, wie beispielsweise optische Größen, zur Drehzahlerfassung auswerten.

**Patentansprüche**

**1.** Auswerte- und Steuereinheit (10, 100) welche von mindestens einer Drehzahlerfassungsvorrichtung (20, 22, 24, 26, 28) ausgegebene Signale empfängt und auswertet, wobei die Drehzahlerfassungsvorrichtung (20, 22, 24, 26, 28) Teil einer Sensoranordnung für ein Fahrzeug ist, welche fortlaufend mindestens eine Zustandsgröße (S) erfasst und an mindestens eine Auswerte- und Steuereinheit (10, 100) ausgibt, wobei die Drehzahlerfassungsvorrichtung (20, 22, 24, 26, 28) eine Codierscheibe (21) mit einer vorgegebenen Anzahl (N) von Codebereichen (21.1) und einen zugeordneten Sensor (23) umfasst, wobei jeder Codebereich (21.1) im zugeordneten Sensor (23) einen Messimpuls der erfassten Zustandsgröße (S) mit einer individuellen Impulsdauer ($\Delta t_i$) erzeugt,

wobei die Auswerte- und Steuereinheit (10, 100) einen ersten Auswertevorgang (12) mit der erfassten mindestens einen Zustandsgröße (S) durchführt und eine Drehzahl mindestens eines Fahrzeugrads (30) ermittelt, dessen Felge (32) über Radbefestigungsmittel (34) an einer korrespondierenden Radnabe (52) befestigt ist,

wobei

die Auswerte- und Steuereinheit (10, 100) einen zweiten Auswertevorgang (14) durchführt und basierend auf der fortlaufend erfassten mindestens einen Zustandsgröße (S) ein mechanisches Spiel zwischen dem mindestens einen Fahrzeugrad (30) und der korrespondierenden Radnabe (52) erkennt und zur Detektion gelöster Radbefestigungsmittel (34) überwacht, wobei die Auswerte- und Steuereinheit (10, 100) im zweiten Auswertevorgang (14) die individuelle Impulsdauer ($\Delta t_i$) für jeden Codebereich (21.1) ermittelt.

2.  Auswerte- und Steuereinheit (10, 100) nach Anspruch 1, **dadurch gekennzeichnet, dass** die Auswerte- und Steuereinheit (10, 100) im zweiten Auswertevorgang (14) eine mittlere Impulsdauer ($\Delta t_{Mittel}$) über eine Radumdrehung als Quotient aus der Summe der erfassten individuellen Impulsdauern ($\Delta t_i$) der vorhandenen Codebereiche (21.1) der Codierscheibe (21) und der Anzahl (N) der vorhandenen Codebereiche (21.1) berechnet.

3.  Auswerte- und Steuereinheit (10, 100) nach Anspruch 2, **dadurch gekennzeichnet, dass** die Auswerte- und Steuereinheit (10, 100) im zweiten Auswertevorgang (14) eine periodische Variation ($\varepsilon_i$) der individuellen Impulsdauern ($\Delta t_i$) über die Raddrehzahl ($\omega$) bestimmt.

4.  Auswerte- und Steuereinheit (10, 100) nach Anspruch 3, **dadurch gekennzeichnet, dass** die Auswerte- und Steuereinheit (10, 100) im zweiten Auswertevorgang (14) durch Filterung und/oder Fouriertransformation eine Transformation der periodische Variation ($\varepsilon_i$) in den Frequenzbereich durchführt.

5.  Auswerte- und Steuereinheit (10, 100) nach Anspruch 3, **dadurch gekennzeichnet, dass** die Auswerte- und Steuereinheit (10, 100) Amplituden von Spektrallinien des Frequenzspektrums der periodischen Variation ($\varepsilon_i$) der individuellen Impulsdauer ($\Delta t_i$) ermittelt, deren Frequenz einem ganzzahligen Vielfachen der mit der Anzahl der Radbefestigungsmittel (34) multiplizierten Raddrehzahl ($\omega$) entspricht.

6.  Auswerte- und Steuereinheit (10, 100) nach Anspruch 5, **dadurch gekennzeichnet, dass** die Auswerte- und Steuereinheit (10, 100) während der Frequenzanalyse die ermittelten Amplituden mit vorgegebenen Schwellwerten vergleicht und gelöste Radbefestigungsmittel (34) erkennt, wenn die ermittelten Amplituden vorgegebene Schwellwerte erreichen oder überschreiten.

7.  Auswerte- und Steuereinheit (10, 100) nach Anspruch 3, **dadurch gekennzeichnet, dass** die Auswerte- und Steuereinheit (10, 100) einen Schlupfwinkel ($\varphi_s$) eines in Lastwechselsituationen auftretenden Schlupfes (ds) zwischen dem mindestens einen Fahrzeugrad (30) und der korrespondierenden Radnabe (52) als Kurzzeitsumme aus einer Differenz einer instantaner Raddrehzahl ($\omega_i$), welche aus der individuellen Impulsdauer ($\Delta t_i$) berechnet ist, und einer mittleren Raddrehzahl ($\omega_{Mittel}$), welche aus der mittleren Impulsdauer ($\Delta t_{Mittel}$) berechnet ist, und/oder aus der Kurzzeitsumme über die Variation ($\varepsilon_i$) ermittelt und zur Erkennung des mechanischen Spiels zwischen dem mindestens einen Fahrzeugrad (30) und der korrespondierenden Radnabe (52) auswertet.

8.  Auswerte- und Steuereinheit (10, 100) nach Anspruch 7, **dadurch gekennzeichnet, dass** die Auswerte- und Steuereinheit (10, 100) gelöste Radbefestigungsmittel (34) am korrespondierenden Fahrzeugrad (30) erkennt, wenn der Betrag des berechneten Schlupfwinkels ($\varphi_s$) einen vorgegebenen Schwellwert erreicht und/oder in einem vorgegebenen Toleranzbereich um diesen Schwellwert liegt.

9.  Auswerte- und Steuereinheit (10, 100) nach einem der Ansprüche 1 bis 8, **dadurch gekennzeichnet, dass** die Drehzahlerfassungsvorrichtung (20, 22, 24, 26, 28) als magnetische oder optische Drehzahlerfassungsvorrichtung ausgeführt ist.

10. Auswerte- und Steuereinheit (10, 100) nach einem der Ansprüche 1 bis 9, **dadurch gekennzeichnet, dass** die Auswerte- und Steuereinheit (10, 100) gelöste Radbefestigungsmittel (34) mittels einer optischen und/oder akustischen Warnmeldung anzeigt.

**Claims**

1.  Evaluating and control unit (10, 100) that receives and evaluates signals that are output by at least one rotational speed detecting device (20, 22, 24, 26, 28), wherein the rotational speed detecting device (20, 22, 24, 26, 28) is part of a sensor arrangement for a vehicle, which continuously detects at least one state variable (S) and outputs to at least one evaluating and control unit (10, 100), wherein the rotational speed detecting device (20, 22, 24, 26, 28) comprises an encoder disc (21) having a predetermined number (N) of encoding regions (21.1) and an allocated sensor (23), wherein each encoding region (21.1) generates in the allocated sensor (23) a measuring pulse of the detected state variable (S) having an individual pulse duration ($\Delta t_i$), wherein the evaluating and control unit (10, 100) performs a first evaluating process (12) using the detected at least one state variable (S) and determines a rotational speed at least of one vehicle wheel (30) whose wheel rim (32) is fastened to a corresponding wheel hub (52) by way of wheel fastening means (34), wherein the evaluating and control unit (10, 100) performs a second evaluating process (14) and based upon the continuously detected at least one state variable (S) identifies and monitors a mechanical play between the at least one vehicle wheel (30) and the corresponding wheel hub (52) so as to detect loosened wheel fastening means (34), wherein in the second evaluating process (14) the evaluating and control unit (10, 100) determines the individual pulse duration ($\Delta t_i$) for each encoding region (21.1).

2. Evaluating and control unit (10, 100) according to Claim 1, **characterized in that** in the second evaluating process (14) the evaluating and control unit (10, 100) calculates a mean pulse duration ($\Delta t_{Mean}$) over a wheel rotation as a quotient derived from the sum of the detected individual pulse durations ($\Delta t_i$) of the encoding regions (21.1) that are provided on the encoder disc (21) and the number (N) of the provided encoding regions (21.1).

3. Evaluating and control unit (10, 100) according to Claim 2, **characterized in that** in the second evaluating process (14) the evaluating and control unit (10, 100) determines a periodic variation ($\varepsilon_i$) of the individual pulse durations ($\Delta t_i$) over the wheel rotation ($\omega$).

4. Evaluating and control unit (10, 100) according to Claim 3, **characterized in that** in the second evaluating process (14) the evaluating and control unit (10, 100) performs a transformation of the periodic variation ($\varepsilon_i$) into the frequency domain by means of filtering and/or Fourier transformation.

5. Evaluating and control unit (10, 100) according to Claim 3, **characterized in that** the evaluating and control unit (10, 100) determines amplitudes of spectral lines of the frequency spectrum of the periodic variation ($\varepsilon_i$) of the individual pulse duration ($\Delta t_i$), the frequency of said spectral lines corresponding to an integer multiple of the wheel rotational speed ($\omega$) multiplied by the number of wheel fastening means (34).

6. Evaluating and control unit (10, 100) according to Claim 5, **characterized in that** the evaluating and control unit (10, 100) during the frequency analysis compares the determined amplitudes with predetermined threshold values and identifies loosened wheel fastening means (34) if the determined amplitudes achieve or exceed predetermined threshold values.

7. Evaluating and control unit (10, 100) according to Claim 3, **characterized in that** the evaluating and control unit (10, 100) determines a slippage angle ($\varphi_S$) of slippage ($d_S$) that occurs in load changing situations between the at least one vehicle wheel (30) and the corresponding wheel hub (52) as a short term sum from a difference of an instantaneous wheel rotational speed ($\omega_i$) that is calculated from the individual pulse duration ($\Delta t_i$), and a mean wheel rotational speed ($\omega_{Mean}$) that is calculated from the mean pulse duration ($\Delta t_{Mean}$), and/or from the short term sum by way of the variation ($\varepsilon_i$) and evaluates said slippage angle so as to identify the mechanical play between the at least one vehicle wheel (30) and the corresponding wheel hub (52).

8. Evaluating and control unit (10, 100) according to Claim 7, **characterized in that** the evaluating and control unit (10, 100) identifies loosened wheel fastening means (34) at the corresponding vehicle wheel (30) if the value of the calculated slippage angle ($\varphi_S$) achieves a predetermined threshold value and/or said value is in a predetermined tolerance range around this threshold value.

9. Evaluating and control unit (10, 100) according to any one of the Claims 1 to 8, **characterized in that** the rotational speed detecting device (20, 22, 24, 26, 28) is embodied as a magnetic or optical rotational speed detecting device.

10. Evaluating and control unit (10, 100) according to any one of the Claims 1 to 9, **characterized in that** the evaluating and control unit (10, 100) indicates loosened wheel fastening means (34) by means of an optical and/or acoustic warning signal.

**Revendications**

1. Unité (10, 100) d'évaluation et de commande qui reçoit et évalue des signaux délivrés par au moins un ensemble (20, 22, 24, 26, 28) de saisie d'une vitesse de rotation, l'ensemble (20, 22, 24, 26, 28) de saisie d'une vitesse de rotation faisant partie d'un système de capteurs d'un véhicule qui saisit en permanence au moins une grandeur d'état (S) et la délivre à au moins une unité (10, 100) d'évaluation et de commande, l'ensemble (20, 22, 24, 26, 28) de saisie d'une vitesse de rotation comprenant un disque de codage (21) présentant un nombre prédéterminé (N) de zones de codage (21.1) et un capteur (23) associé, chaque zone de codage (21.1) du capteur (23) associé formant une impulsion de mesure de la grandeur d'état (S) qui a été saisie, l'impulsion présentant une durée individuelle ($\Delta t_i$), l'unité (10, 100) d'évaluation et de commande exécutant une première opération d'évaluation (12) sur la ou les grandeurs d'état (S) qui ont été saisies et déterminant la vitesse de rotation d'au moins une roue (30) du véhicule dont la jante (32) est fixée sur un moyeu correspondant (52) de roue par l'intermédiaire de moyens (34) de fixation de roue, l'unité (10, 100) d'évaluation et de commande exécutant une deuxième opération d'évaluation (14) et sur la base de la ou des grandeurs d'état (S) qui sont saisies en permanence, détecte un jeu mécanique entre la ou les roues (30) du véhicule et le moyeu correspondant (52) de roue et le surveille pour détecter si les moyens (34) de fixation de roue se détachent, l'unité (10, 100) d'évaluation et de commande0 déterminant dans la deuxième opération d'évaluation (14) la durée individuelle ($\Delta t_i$) des impulsions de chaque zone de codage (21.1).

2. Unité (10, 100) d'évaluation et de commande selon la revendication 1, **caractérisée en ce que** l'unité (10, 100) d'évaluation et de commande détermine dans la deuxième opération d'évaluation (14) la durée moyenne ($\Delta t_{Mittel}$) des impulsions sur un tour de roue en tant que quotient de la somme des durées individuelles ($\Delta t_i$) des impulsions qui ont été saisies sur les zones de codage (21.1) présentes sur le disque de codage (21) et calcule le nombre (N) des zones de codage (21.1) présentes.

3. Unité (10, 100) d'évaluation et de commande selon la revendication 2, **caractérisée en ce que** l'unité (10, 100) d'évaluation et de commande détermine dans la deuxième opération d'évaluation (14) une variation périodique ($\varepsilon_i$) des durées individuelles ($\Delta t_i$) des impulsions sur la vitesse de rotation ($\omega$) de la roue.

4. Unité (10, 100) d'évaluation et de commande selon la revendication 3, **caractérisée en ce que** l'unité (10, 100) d'évaluation et de commande exécute dans la deuxième opération d'évaluation (14) une transformation de la variation périodique ($\varepsilon_i$) dans la plage de fréquences, par filtrage et/ou transformation de Fourier.

5. Unité (10, 100) d'évaluation et de commande selon la revendication 3, **caractérisée en ce que** l'unité (10, 100) d'évaluation et de commande détermine les amplitudes des lignes spectrales du spectre de fréquence de la variation périodique ($\varepsilon_i$) des durées individuelles ($\Delta t_i$) des impulsions dont la fréquence correspond à un multiple entier de la vitesse de rotation ($\omega$) de la roue multiplié par le nombre des moyens (34) de fixation de roue.

6. Unité (10, 100) d'évaluation et de commande selon la revendication 5, **caractérisée en ce que** l'unité (10, 100) d'évaluation et de commande détermine compare les amplitudes qui ont été déterminées pendant l'analyse de fréquence à des valeurs de seuil prédéterminées et détecte que des moyens (34) de fixation de roue se sont détachés si les amplitudes qui ont été déterminées atteignent ou dépassent des valeurs de seuil prédéterminées.

7. Unité (10, 100) d'évaluation et de commande selon la revendication 3, **caractérisée en ce que** l'unité (10, 100) d'évaluation et de commande détermine un angle de patinage ($\varphi_s$) d'un patinage ($d_s$) qui survient pendant des situations de changement de charge entre la ou les roues (30) du véhicule et le moyeu correspondant (52) de roue en tant que somme sur une courte durée d'une différence entre une vitesse instantanée de rotation (coi) de la roue calculée à partir de la durée individuelle ($\Delta t_i$) des impulsions et une vitesse moyenne de rotation ($\omega_{Mittel}$) de la roue calculée à partir de la durée moyenne ($\Delta t_{Mittel}$) des impulsions et/ou à partir de leur somme sur une courte durée pendant la variation ($\varepsilon_i$), et l'évalue pour détecter s'il existe un jeu mécanique entre la ou les roues (30) du véhicule et le moyeu correspondant (52) de roue.

8. Unité (10, 100) d'évaluation et de commande selon la revendication 7, **caractérisée en ce que** l'unité (10, 100) d'évaluation et de commande détecte si des moyens (34) de fixation de roue se sont détachées sur la roue (30) du véhicule correspondante si le niveau de l'angle de patinage ($\varphi_s$) calculé atteint une valeur de seuil prédéterminée et/ou est situé dans une plage de tolérance prédéterminée autour de cette valeur de seuil.

9. Unité (10, 100) d'évaluation et de commande selon l'une des revendications 1 à 8, **caractérisée en ce que** l'ensemble (20, 22, 24, 26, 28) de saisie d'une vitesse de rotation est réalisé sous la forme d'un ensemble magnétique ou optique de détection d'une vitesse de rotation.

10. Unité (10, 100) d'évaluation et de commande selon l'une des revendications 1 à 9, **caractérisée en ce que** l'unité (10, 100) d'évaluation et de commande affiche que des moyens (34) de fixation de roue se détachent au moyen d'un message d'alerte optique ou acoustique.

Fig. 1

Fig. 2

Fig. 3

34

34

52

32

$r_{LK}$

$\varphi_S$

34

34

34

$d_S$

**Fig. 4**

32

52

34

**Fig. 5**

Fig. 6

Fig. 7

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2008157663 A
- US 20070299573 A1
- EP 1308320 A2
- WO 2009070065 A1